(19) Europäisches Patentamt
European Patent Office
Office européen des brevets

(11) **EP 0 958 464 B1**

(12) **EUROPÄISCHE PATENTSCHRIFT**

(45) Veröffentlichungstag und Bekanntmachung des Hinweises auf die Patenterteilung:
**08.10.2003  Patentblatt 2003/41**

(51) Int Cl.7: **F16D 57/04**

(21) Anmeldenummer: 97953795.8

(22) Anmeldetag: **12.12.1997**

(86) Internationale Anmeldenummer:
**PCT/EP97/06976**

(87) Internationale Veröffentlichungsnummer:
**WO 98/035171 (13.08.1998 Gazette 1998/32)**

(54) **HYDRODYNAMISCHER RETARDER MIT AXIAL VERSCHIEBBAREM ROTOR**

HYDRODYNAMIC RETARDER WITH AN AXIALLY DISPLACEABLE ROTOR

RALENTISSEUR HYDRODYNAMIQUE A ROTOR DEPLACABLE AXIALEMENT

(84) Benannte Vertragsstaaten:
**DE FR GB IT SE**

(30) Priorität: **06.02.1997  DE 19704304**
**06.02.1997  DE 19704407**

(43) Veröffentlichungstag der Anmeldung:
**24.11.1999  Patentblatt 1999/47**

(73) Patentinhaber: **Voith Turbo GmbH & Co. KG**
**89522 Heidenheim (DE)**

(72) Erfinder:
• **FRIEDRICH, Jürgen**
**D-74564 Crailsheim (DE)**
• **HEILINGER, Peter**
**D-74564 Crailsheim (DE)**
• **HÖLLER, Heinz**
**D-74564 Crailsheim (DE)**
• **MONDORF, Karl**
**D-74564 Crailsheim (DE)**

(74) Vertreter: **Dr. Weitzel & Partner**
**Friedenstrasse 10**
**89522 Heidenheim (DE)**

(56) Entgegenhaltungen:
| | |
|---|---|
| DE-A- 1 525 396 | DE-A- 1 600 148 |
| DE-A- 1 600 154 | DE-A- 1 600 187 |
| DE-A- 3 042 017 | DE-A- 4 010 970 |
| DE-A- 4 420 204 | DE-C- 3 113 408 |

**Beschreibung**

Die Erfindung betrifft einen hydrodynamischen Retarder gemäß dem Oberbegriff von Anspruch 1 sowie ein Verfahren zum selbsttätigen Verbringen des Rotors eines Retarders aus einer ersten Position in eine zweite Position; vorzugsweise ist die erste Position eine Leelaufposition und die zweite Position eine Arbeitsposition.

Hydrodynamische Retarder sind beispielsweise aus VDI Handbuch Getriebetechnik II, VDI-Richtlinien VDI 2153, Hydrodynamische Leistungsübertragung Begriffe - Bauformen - Wirkungsweisen, Kapitel 7, Bremsen oder Dubbel, Taschenbuch für den Maschinenbau, 18. Auflage, Seiten R49 bis R53 bekannt, deren Offenbarungsgehalt vollumfänglich in die Anmeldung mit einbezogen. Derartige Retarder werden, insbesondere beim Einsatz in Kraftfahrzeugen oder in Anlagen mit stark wechselndem Betrieb, durch Füllen und Entleeren des beschaufelten Arbeitskreislaufs mit einem Betriebsfluid ein- oder ausgeschaltet. Auch bei ausgeschaltetem Retarder ist noch ein Restmoment vorhanden, beispielsweise aufgrund einer umlaufenden Restölmenge. Das durch das Restmoment bedingte Bremsmoment ist zwar sehr gering, kann sich jedoch bei hohen Drehzahlen sehr störend auswirken und zu einer unzulässig hohen Erwärmung des Retarders führen. Zur Vermeidung der Ventilationsverluste sind bereits eine Reihe von Lösungen bekannt. Dazu gehören u.a. die Verwendung von Statorbolzen sowie die Möglichkeit einer Kreislaufevakuierung. Diese Lösungen sind jedoch sehr aufwendig in ihrer Umsetzung und bedingen einen erhöhten Platzbedarf und damit größere Retarderabmessungen. Wesentliche Nachteile bei der Verwendung von Statorbolzen sind darin zu sehen, daß diese aufgrund ihrer Anordnung im Profilgrund des Stators auch im Bremsbetrieb in den Arbeitskreislauf hineinreichen und diesen damit stören. Die Möglichkeit der Verwendung getrennter äußerer Kühl-Kreisläufe, bei der beim Leerlaufbetrieb eine genau bestimmte Ölmenge in einem separaten Kreislauf eingeschlossen wird, ist sehr aufwendig in ihrer Umsetzung, da zusätzliche Bauteile benötigt werden. Des weiteren muß ständig eine sichere Trennung zwischen den einzelnen Zirkulationswegen gewährleistet sein.

Eine weitere Möglichkeit zur Reduzierung der Leerlaufverluste besteht im Verschwenken des Statorschaufelrades gegenüber dem Rotorschaufelrad. Möglichkeiten zur Lageänderung des Statorschaufelrades gegenüber dem Rotorschaufelrad sind bereits aus den folgenden Druckschriften bekannt:

    1. DE 31 13 408 C1
    2. DE 40 10 970 A1
    3. DE 44 20 204 A1
    4. DE 15 25 396 A1
    5. DE 16 00 148 A1
    6. DE-A-1 600 154

Die diesen Ausführungen zugrundeliegende Aufgabe besteht in einer aktiven Anpassung an verschiedene Betriebszustände.
Die DE 31 13 408 C1 offenbart Möglichkeiten einer Statorschaufelradverstellung eines Retarders für den Einsatz in stationären Anlagen, beispielsweise in Windkraftanlagen zur Umsetzung der Windenergie in Wärme. Die Verstellung erfolgt manuell oder mittels entsprechender Hilfsmittel. Die Feststellung des Statorschaufelrades in der ausgeschwenkten Lage erfolgt mittels mechanischer Hilfsmittel, beispielsweise in Form von Schrauben. Die Verstellung erfolgt zum Zweck der Anpassung der Strömungsbremse an die Windkraftanlage. Der Zeitaufwand für die Realisierung einer Verstellung ist entsprechend hoch, und die Ausführung ist demzufolge in keiner Weise für den Einsatz im Fahrzeug geeignet.

Der in der Druckschrift DE 40 10 970 A1 offenbarte Retarder weist analog zu der erstgenannten Druckschrift ein Statorschaufelrad auf, das in seiner Lage veränderbar ist. Jedoch erfolgt hier eine Lageveränderung durch eine zusätzlich zum Bremsmoment erzeugte Reaktionskraft, die dem Bremsmoment proportional ist. Diese Reaktionskraft wird durch eine entsprechende Gestaltung und Lagerung des Schaufelrades erzeugt. Der Reaktionskraft wird eine Verstellkraft, die von einer Verstelleinrichtung aufgebracht wird, entgegengesetzt. Die Größe der Verstelikraft beeinflußt dabei entscheidend die Wirkung der Reaktionskraft und damit das Bremsmoment aufgrund der Bedingung, daß die Summe aller auf ein abgeschlossenes System wirkenden äußeren Momente gleich Null ist. Beide Möglichkeiten dienen zur Einstellung bzw. Steuerung des Bremsmomentes. Sie zeichnen sich durch einen enormen konstruktiven Aufwand sowie eine hohe Bauteilanzahl aus.

Aus der DE 44 20 204 A1 ist ein Retarder mit einem selbsttätigen Schwenkstator bekannt geworden, der aufgrund seiner exzentrischen Lagerung im Leerlaufbetrieb selbsttätig in eine Lage gebracht wird, in der keine oder nur ein geringer Teil an Luftmassen zwischen dem Rotorschaufelrad und dem Statorschaufelrad bewegt wird.

Eine andere Möglichkeit der Minimierung von Leerlaufverlusten besteht gemäß der DE 15 25 396 A1 und der DE 16 00 148 A1 darin, mit Hilfe eines Kupplungssystems die Rotoren im Leerlauf von der Bremswelle zu lösen und im Bremsbetrieb mit der Bremswelle zu kuppeln, um so die Leerlaufleistung möglichst gering zu halten. Nachteilig an diesen Retardem war deren aufwendige Konstruktion. DE-A-1 600 154 zeigt eine hydrodynamische Bremse, die ständig mit Betriebsflüssigkeit gefüllt ist und deren Regelung der Bremsleistung durch An- und Abfahren des Stators von Rotor erfdgt.

Die Aufgabe der Erfindung besteht darin, einen Retarder der eingangs genannten Art derart weiterzuentwikkeln, daß die genannten Nachteile vermieden werden. Aufgrund der Tatsache, daß der Leerlaufbetrieb etwa 95 % der Gesamtlaufzeit eines Retarders beträgt, ist eine minimale Leerlaufleistung anzustreben. Gleichzeitig soll mit geringstmöglichem konstruktiven Aufwand der Retarder in Betriebsbereitschaft versetzt werden.

Die obengenannte Aufgabe wird durch einen hydrodynamischen Retarder mit den Merkmalen des Anspruches 1 gelöst.

Gemäß der erfindungsgemäßen Lösung weist der Retarder Mittel zur axialen Verschiebung des Rotors gegenüber dem Stator auf, die Mittel zum selbsttätigen Verbringen des Rotors aus einer ersten Position in eine zweite Position umfassen.

Vorzugsweise ist die erste Position die Leerlaufposition und die zweite Position die Arbeitsposition.

Dies ermöglicht es, daß der zwischen Rotor und Stator im Leerlauf bestehende Spalt bei Inbetriebnahme des Retarders selbsttätig verändert wird, bis der Spaltabstand des Betriebszustandes erreicht ist.

Bei einem ausreichend bemessenen Abstand zwischen Rotor und Stator können die Reaktionskräfte der Luftfüllung eines entleerten Retarders so stark herabgesetzt werden, daß eine unzulässige Erwärmung des Retarders im Nicht-Bremsbetrieb ohne bzw. mit verminderter Kühlung vermieden wird.

In einer besonders vorteilhaften Ausführungsform wird der Rotor axial verschiebbar beispielsweise auf der rotierenden Rotorwelle gelagert.

In einer ersten Ausführungsform weist das Rotorgehäuse mindestens einen Druckraum auf, wobei ein Teil der Begrenzungswand des Druckraumes von der Rotorrückseite gebildet wird. Dies eröffnet die Möglichkeit, eine Verschiebung des Rotors dadurch zu erreichen, daß der auf der Rotorrückseite angeordnete Druckraum mit einem Druckmedium gefüllt wird, das dazu dient, den Rotor nach der Art eines Kolbens durch die Druckkraft axial zu verschieben. Die hydrodynamischen Reaktionskräfte, die der Druckkraft auf die Retarderrückseite entgegengerichtet sind, müssen dabei überwunden werden,

Besonders vorteilhaft ist es, wenn das Rotorgehäuse zwei Druckräume aufweist, wobei einer der Druckräume Teil des Auslaßkanales des Retarders ist. Eine derartige Ausgestaltung der Erfindung hat den Vorteil, daß kein Druck auf das Rotorgehäuse mehr ausgeübt wird, wenn der Retarder entleert ist und damit im ausgeschalteten Zustand ein Spalt entsprechender Größe entsteht und Stator und Rotor weitgehend entkoppelt sind.

Besonders vorteilhaft ist es, wenn der zweite Druckraum Teil des Füllkanales für den Retarder ist. Hierdurch kann erreicht werden, daß, wenn der Retarder befüllt wird, der Rotor axial gegen den Stator verschoben wird, so daß sich ein immer engerer Laufradspalt mit steigendem Auslaßdruck einstellt.

In einer vorteilhaften Weiterbildung der Erfindung weist das Rotorgehäuse noch einen weiteren, beispielsweise einen dritten Druckraum auf. Dies ist insbesondere dann vorteilhaft, wenn der erste und der zweite Druckraum Teil des Füll- bzw. Auslaßkanales sind. Über den dritten Druckraum kann dann nämlich eine zusätzliche Druckkraft aufgebracht werden, beispielsweise wenn der Retarder bereits entleert oder noch nicht vollständig bzw. nur teilweise befüllt ist.

In einer besonders kostengünstigen Ausführungsform ist vorgesehen, daß die Mittel zum selbsttätigen Verbringen Mittel zum Umsetzen des Rotordrehmomentes in eine Axialbewegung umfassen. In der Leerlaufposition gilt, wenn der Retarder in Drehung aufgrund der Umsetzung des Rotordrehmomentes versetzt wird, stets:

$$F_{ax} \text{ (mechanische Axialkräfte)}$$

$$> F \text{ (hydraulische Axialkräfte)},$$

so daß der Abstand von Stator und Rotor abnimmt, bis der Abstand des Betriebszustandes erreicht wurde.

Für die Umsetzung des Rotordrehmomentes in eine Axialbewegung sind eine Vielzahl von konstruktiven Lösungen denkbar. In einer ersten Ausführungsform kann vorgesehen sein, daß die Mittel zum Umsetzen ein Gewinde mit gleichmäßiger Steigung, beispielsweise ein Steilgewinde umfassen.

In einer alternativen Ausführungsform können die Mittel zum Umsetzen eine Kulissenführung umfassen.

Besonders bevorzugt ist es, wenn das Gewinde bzw. die Kulissenführung auf der Rotornabe selbst angeordnet ist.

Alternativ hierzu könnte das Gewinde bzw. die Kulissenführung auch in einem mitdrehenden Rotorgehäuse ausgebildet sein.

Neben der Ausführung der Mittel zum Umsetzen des Drehmomentes in eine Axialkraft in Form eines Gewindes sind andere konstruktive Ausgestaltungen denkbar, wie beispielsweise ein Zugmittel, eine Hebelvorrichtung, etc.

Will man beim Verlassen des Betriebszustandes den Rotor vom Stator wieder selbsttätig entkoppeln, so ist es vorteilhaft, eine Rückstelleinrichtung vorzusehen. Mit Hilfe dieser Rückstelleinrichtung ist es möglich, den Rotor im Nicht-Bremsbetrieb selbsttätig wieder in die Leerlaufposition zu bringen, in der der Rotor vom Stator durch einen großen Spalt getrennt und damit weitgehend entkoppelt ist.

In einer Weiterbildung der Erfindung kann vorgesehen sein, daß die Rückstelleinrichtung mindestens eine Feder umfaßt. In einer weiteren Ausführungsform kann die Rückstellung auch durch Druckbeaufschlagung erfolgen.

Als weiteres Mittel zur axialen Verschiebung des Rotors gegenüber dem Stator kann auch ein Kolben bzw. in einer zweiten Ausführungsform ein beispielsweise elektrischer Stellantrieb vorgesehen sein.

Die Erfindung soll nachfolgend anhand der Zeichnungen beispielhaft beschrieben werden.

Es zeigen:

Fig. 1            einen erfindungsgemäßen Retarder gemäß einer ersten Ausführungsform der Erfindung;

Fig. 2            eine Weiterbildung der Erfindung gemäß Fig. 1 mit einem weiteren Druckraum;

Fig. 3            eine Ausführungsform der Erfindung, bei der der Füllkanal statorseitig angeordnet ist;

Fig. 4            eine Ausführungsform der Erfindung, die als Mittel zur axialen Verschiebung einen Kolben umfaßt;

Fig. 6            eine zweite Ausführungform der Erfindung mit Mitteln zum Umsetzen des Retarderdrehmomentes in eine Axialbewegung;

Fig. 7            eine Detailansicht eines Steilgewindes als Umsetzmittel auf der Rotornabe;

Fig. 8A-8B        eine Detailansicht einer Kulissenführung als Umsetzmittel;

Fig. 9A-9C        eine Detailansicht einer Hebelkonstruktion als Umsetzmittel;

Fig. 10A-10C      eine Detailansicht einer Zugmittelkonstruktion als Umsetzmittel.

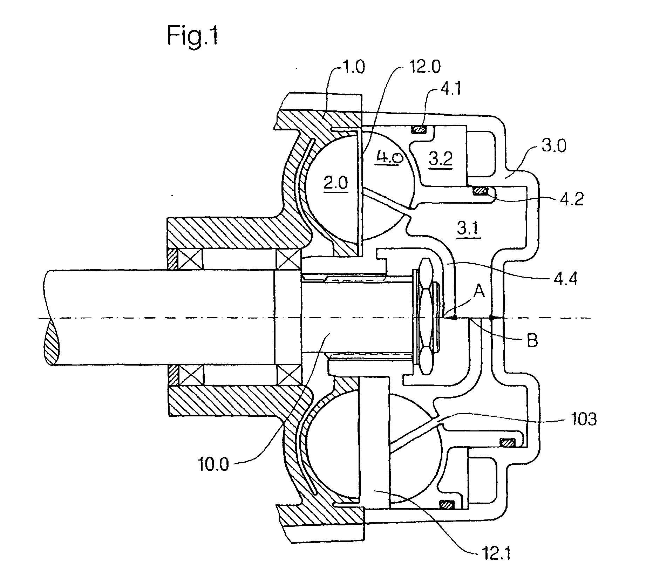

Figur 1 zeigt eine erste Ausführungsform der Erfindung. Dargestellt ist ein hydrodynamischer Retarder, bestehend aus einem Statorgehäuse 1.0, das einen Stator 2.0 aufnimmt sowie einem Rotorgehäuse 3.0, in dem der Rotor 4.0 angeordnet ist. Der Rotor 4.0 wird in vorliegendem Ausführungsbeispiel verschiebbar auf einer Welle 10.0 geführt. Die Welle 10.0 wiederum wird beispielsweise über nicht dargestellte Zahnräder beispielsweise mit der Kurbelwelle des Motors im Falle eines Primärretarders verbunden oder aber mit einer getriebeabtriebsseitig angeordneten Welle, beispielsweise der Getriebeabtriebswelle im Falle eines Sekundärretarders. Zwischen dem Rotor und dem Stator befindet sich ein Spalt 12.0 bzw. 12.1. Spalt 12.0 ergibt sich im Bremsbetrieb, während Spalt 12.1 im ausgeschalteten Zustand bzw. Leerlaufbetrieb vorliegt.

Die Welle 10.0 ragt im diesem Ausführungsbeispiel in das Rotorgehäuse 3.0 hinein, durchbricht aber die Rotorrückwand 4.4 nicht. Diese Ausbildung ermöglicht es daß an der Rotorrückwand 4.4 ein Druckraum 3.1 ausgebildet werden kann. Wird Druckraum 3.1 mit Druck beaufschlagt so kann dadurch der Rotor in seiner axialen Position verschoben werden.

Die Befüllung des Retarders kann beispielsweise über die einzelnen Schaufeln des Rotors über Öffnung 103 aus dem Druckraum 3.1 erfolgen, der vorliegend Teil des Füllkanals ist. Die Befüllung des Retarders über die einzelnen Schaufeln hat den Vorteil, insbesondere bei einer zentralen bzw. mittigen Befüllung, daß ein niedrigerer Fülldruck als bei anderer Befüllung ermöglicht wird. Ein weiterer Vorteil liegt in den bei dieser Bauform niedrigen Ansteuerdrücken.

Die dargestellte Ausführungsform zeichnet sich insbesondere dadurch aus, daß im Rotorgehäuse 3.0 zwei Druckräume ausgebildet werden. Druckraum 3.1 ist Teil des Füllkanales des Retarders, und Druckraum 3.2 Teil des Auslaufkanales. Der Druckraum 3.1 bzw. 3.2 umfaßt als Bewandung einen Teil der Gehäusewandung sowie die Rotorrückseite 4.4. Der Rotor ist am Außendurchmesser mit einer Drehabdichtung 4.1 sowie auf einem kleineren variablen Durchmesser mit einer Drehabdichtung 4.2 versehen, so daß die Druckräume bzw. Kanäle 3.1 und 3.2 zueinander und nach außen abgedichtet sind. Die möglichen Lagen des Rotors im Rotorgehäuse sind mit den Positionen A und B angegeben. Dabei ist Position A der Betriebszustand "Bremsen" des Retarders, bei dem der Abstand 12.0 des Rotors 4.0 vom Stator 2.0 nur sehr gering ist, wohingegen in der Ruheposition B "Leerlaufbetrieb", die in der unteren Hälfte von Figur 1 dargestellt ist, der Rotor einen großen Abstand 12.1 vom Stator aufweist. In der "Leerlaufposition" B weisen Rotor 4.0 und Stator 2.0 den im Rahmen der baulichen Ausgestaltung maximal möglichen Abstand auf. Der Spalt 12.1 ist zwischen Rotor 4.0 und Stator 2.0 in dieser Ruheposition so groß; daß die beiden Schaufelräder praktisch entkoppelt sind, wodurch im Leerlaufbetrieb, d.h. bei entleertem Retarder, nur noch minimale Leerlaufwärmeenergie erzeugt wird. Eine seperate Kühlung des Retarders im Leerlaufbetrieb bzw. ein Umwälzen des Arbeitsmittels ist in der dargestellten Ruhestellung nicht oder nur in geringem Maße notwendig, da die Wärmeentwicklung das erlaubte Maß nicht oder nur wenig übersteigt. Besonders vorteilhaft ist bei der in Figur 1 dargestellten Ausführungsform, daß, wie nachfolgend beschrieben, eine vollständig selbsttätige Verschiebung des Rotors in die im oberen Abschnitt von Fig. 1 dargestellte Arbeitsposition aus der Ruheposition möglich ist. Dies wird dadurch erreicht, daß nach Aktivierung des Retarders beispielsweise mit Hilfe eines Einschaltimpulses das Arbeitsmedium des Retarders durch den Füllkanal und den Füllkanaldruckraum 3.1 in den Retarder strömt. Durch den auf die Rotorrückseite 4.4 im Bereich des Füllkanaldruckraumes 3.1 wirkenden Druck wird der Rotor 4.0 in die auf der oberen Hälfte von Figur 1 dargestellte Arbeitsposition mit Spalt 12.0 gegen die hydrodynamischen Axialkräfte axial verschoben. Das automatische Verbringen des Rotors in die Position für den Bremsbetrieb durch Druckbeaufschlagung der Rotorrückseite hat den Vorteil, daß keine zusätzlichen extern aufgebrachten Kräfte hierfür benötigt werden. Wird das Arbeitsmedium im Nicht-Bremsbetrieb bzw. Leerlaufbetrieb aus dem Retarder entleert, beispielsweise dadurch, daß mittels eines Ausschaltimpulses die Zuführung des Betriebsmediums über den Füllkanal unterbrochen wird, so fallen die Drücke im Bereich des Füllkanaldruckraumes 3.1 und des Auslaßkanaldruckraumes 3.2 auf einen minimalen Wert ab. Sie reichen nicht mehr aus, um den Rotor in der Arbeitsposition gegen die auch bei entleertem Retarder wirkenden Axialkräfte zu halten. Der Retarder wird daher in die dargestellte Ruheposition gebracht. Im Gegensatz zu Ausführungsformen, bei denen beispielsweise durch Einschieben von Blechwangen die Leerlaufverluste minimiert werden, erfolgt dies vorliegend selbsttätig, d.h. zusätzliche Hebelvorrichtungen, die einen großen Fertigungsaufwand und eine seperate Steuermechanik bedingen, werden nicht benötigt.

Der besondere Vorteil der dargestellten Lösung gemäß Figur 1 liegt darin, daß keine externen Maßnahmen zur axialen Verschiebung des Rotors 4.0 notwendig sind, sondern daß hierfür auf die im System bereits zur Verfügung gestellten Drücke zurückgegriffen werden kann und der Retarder selbsttätig im Nicht-Bremsbetrieb in seine Ruheposition gelangt.

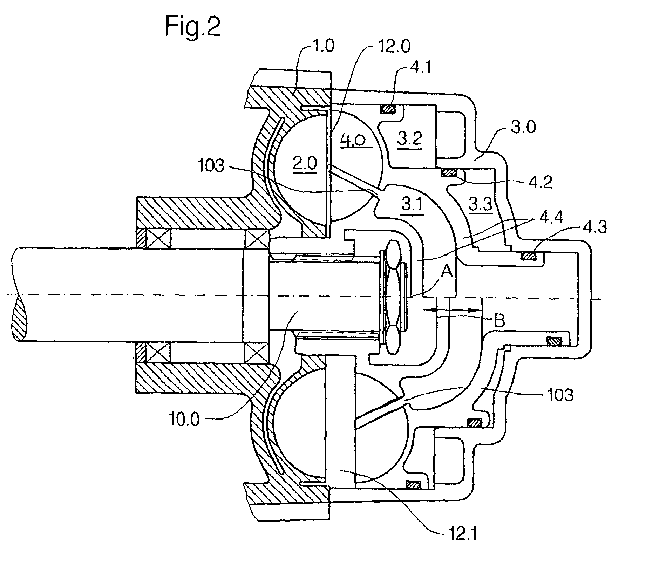

In Figur 2 ist eine weitere Ausführungsform der Erfindung dargestellt. Gleiche Bauteile wie in Figur 1 werden mit denselben Bezugsziffern bezeichnet.

Wiederum ist ein hydrodynamischer Retarder, bestehend aus einem Statorgehäuse 1.0 mit einem Stator 2.0 sowie einem Rotorgehäuse 3.0 mit einem Rotor 4.0 dargestellt. Füllkanal 3.1 und Auslaßkanal 3.2 sind wiederum derart angeordnet, daß sie auf die Rotorrückseite wirken. Zusätzlich zu der in Figur 1 erläuterten Ausführungsform weist das Gehäuse neben dem Druckraum 3.1, der Teil des Füllkanales ist, und Druckraum 3.2, der Teil des Auslaßkanales ist, einen weiteren Druckraum 3.3 auf, der wiederum auf die Rotorrückseite wirkt. Die Abdichtung der Druckräume wird durch die Drehabdichtungen 4.1, 4.2 und 4.3 sichergestellt. Die Funktion des Systems ist der von Figur 1 ähnlich. Der wesentliche Unterschied liegt darin, daß aufgrund des zusätzlichen Druckraumes 3.3 der Stator zusätzlich extern mit Druck beaufschlagt werden kann. Hierbei kann dem Druckraum 3.3 entweder ein Fluid oder Gas zugeführt werden. Dadurch, daß der Druckraum 3.3 unabhängig vom Arbeitsfluid des Retarders befüllt werden kann, ist es möglich, den Rotor 4.0 bereits vor Entstehen eines Fülldruckes im Füllkanal bzw. Füllkanaldruckraum 3.1 in Richtung des Stators 2.0 und damit in die Arbeitsposition axial zu verschieben. Hierdurch kann die Einschaltzeit des Retarders entscheidend verringert werden. Die selbsttätige axiale Verschiebung des Retarders in die in Figur 2 in der unteren Bildhälfte dargestellte Ruheposition erfolgt analog zu Figur 1.

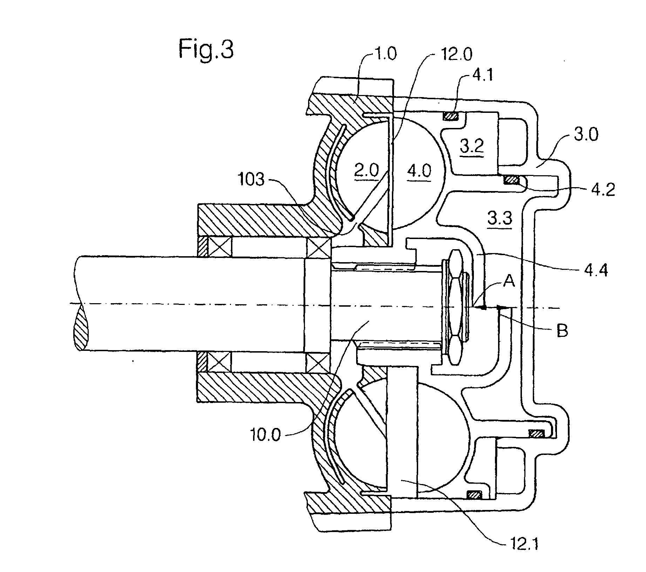

In Fig. 3 ist eine weitere Ausführungsform der Erfindung dargestellt, wobei wiederum gleiche Bauteile mit gleichen Bezugsziffern bezeichnet werden.

Im Gegensatz zu den Figuren 1 und 2 weist der vorliegende Retarder keine Rotor-, sondern eine Statorbefüllung über Öffnung 103 auf. Infolgedessen ist der Füllkanal zwischen dem Statorgehäuse 1.0 und dem Stator 2.0 angeordnet. Der Stator weist eine Abdichtung zum Füllkanal hin auf. Durch die Verlegung des Füllkanales in dem Bereich zwischen Stator und Statorgehäuse, sind zur Abdichtung der Druckräume 3.2 und 3.3 auf der Rotorrückseite nunmehr zwei Abdichtungen 4.1 und 4.2 notwendig. Wiederum ist der Druckraum 3.2 Teil des Auslaßkanales, und der Druckraum 3.3 ein weiterer Druckraum, der unabhängig vom Arbeitsmedium des Retarders befüllt werden kann. Aufgrund der vergrößerten Wirkfläche des Druckraumes 3.3 kann entweder der extern aufgebrachte Druck zur axialen Verschiebung des Rotors herabgesetzt werden, zum anderen ist es möglich, den Retarder kürzer auszubilden, d.h. Bauraum zu sparen. Betreffend die Funktionsweise des in Figur 3 dargestellten Retarders wird auf die zuvor gemachten Ausführungen zu den Figuren 1 und 2 verwiesen. Die Betätigung erfolgt analog.

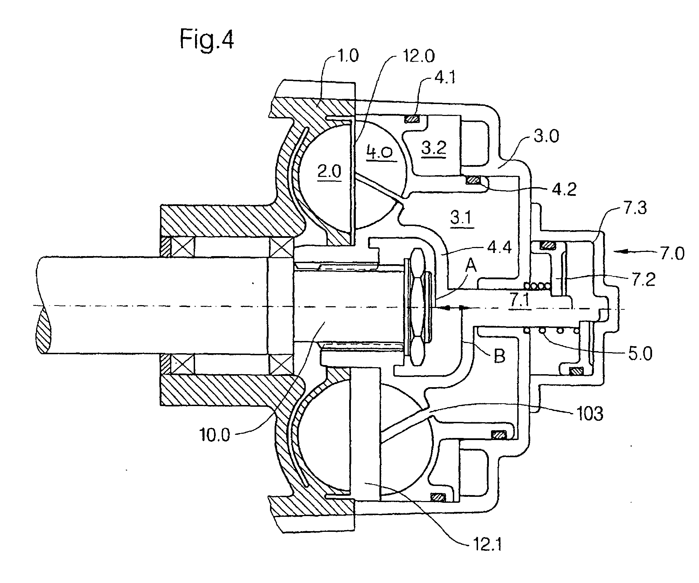

Eine weitere Ausgestaltung der Erfindung ist in Figur 4 dargestellt. Wiederum sind gleiche Bauteile mit identischen Bezugszeichen bezeichnet.

Als zusätzliches Mittel zum axialen Verschieben des Stators im Statorgehäuse 3.0 umfaßt die Ausführungsform gemäß Figur 4 einen Zylinder 7.0, der sich an dem Abschlußdeckel des Rotorgehäuses 3.0 anschließt. Der Zylinder 7.0 weist einen Kolben 7.2, der auf eine Kolbenstange 7.1 wirkt, die wiederum mit der Rückseite des Rotorgehäuses verbunden ist, auf und ist in einem separaten Gehäuse 7.3 untergebracht. Die Druckfeder 5.0 umgibt die Kolbenstange 7.1 und wirkt einerseits auf den Kolben 7.2 wie auch auf die Rückwand des Rotorgehäuses 3.0. Im Ruhezustand befindet sich der Retarder in dem in der unteren Bildhälfte gezeigten Zustand, d.h. der Rotor ist in eine Position verfahren, bei der der Abstand zwischen Rotor und Stator maximal ist. Wie schon in dem vorangegangenen Beispiel, wird der Rotor auf der Antriebswelle 10 geführt. Wie schon in den Figuren 1 und 2 weist das Rotorgehäuse den Füllkanaldruckraum 3.1 wie auch den Auslaßkanaldruckraum 3.2 auf. Analog zu Fig. 3, ist eine Befüllung des Zylinders 7.0 sowohl mit einer hydraulischen Flüssigkeit wie auch mit einem Gas möglich. Letzteres erlaubt eine pneumatische Betätigung.

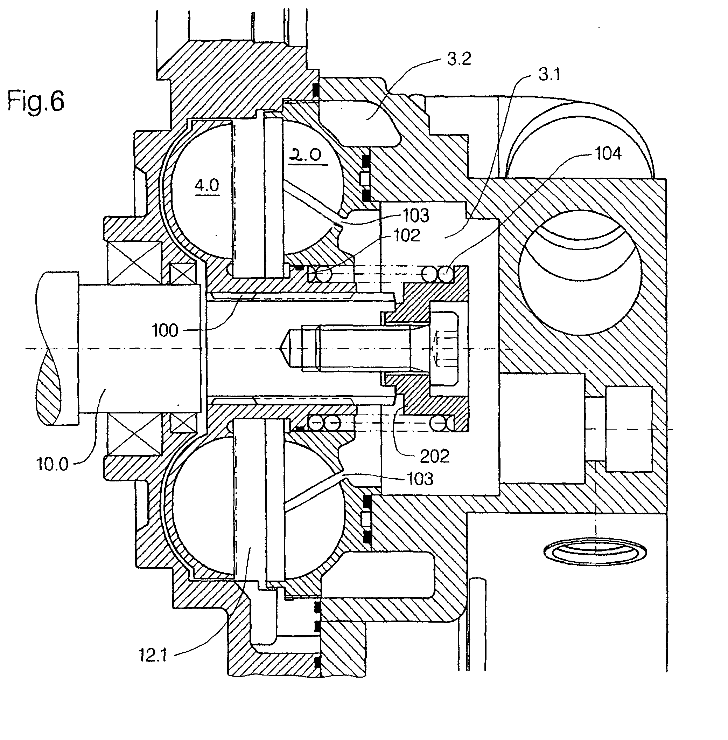

In Figur 6 ist eine zweite Ausführungsform der Erfindung dargestellt, die sich dadurch auszeichnet, daß die Mittel zum selbsttätigen Verbringen des Rotors aus einer Leerlaufposition in eine Arbeitsposition Mittel zum Umsetzen des Rotordrehmomentes in eine Axialbewegung umfassen. Gleiche Bauteile wie in den Figuren 1-5 sind wiederum mit gleichen Bezugsziffern bezeichnet. Der Rotor 4.0 wird verschiebbar auf einer Welle 10 geführt, die wiederum über Zahnräder, beispielsweise mit der Kurbelwelle des Motors im Falle eines Primärretarders, oder aber mit einer getriebeabtriebseitig angeordneten Welle im Falle eines Sekundärretarders, verbunden sind. Das besondere an der dargestellten Ausführungsform gemäß Figur 6 liegt darin, daß der Rotor 4.0 entlang eines in der vorliegenden Figur nicht dargestellten Steilgewindes 100 geführt wird. Das Steilgewinde 100 ist in den Umfang der Rotorwelle 10 eingearbeitet. In der dargestellten Ausführungsform umfaßt der entlang des Steilgewindes axial verschiebbare Rotor 4.0 einen Anschlag 102, auf dem sich eine Rückstellfeder 104 abstützt. Im in Figur 6 dargestellten Leerlaufzustand besteht zwischen dem Rotor 4.0 und dem Stator 2.0 ein großer Spaltabstand 12.1. Dieser wird durch die Federkraft der Feder 104 aufrechterhalten, die den Rotor in der dargestellten Position hält. Im Leerlauf ist der Retarder unbefüllt und die Federkraft der Feder 104 ist ausreichend groß, gegen das axial umgesetzte Drehmomentes des umlaufenden Rotors 4.0 zu wirken und den Rotor in der Leerlaufposition mit großem Spaltabstand 12.1 zu halten. Wird der Retarder befüllt, so steigt das Drehmoment des Rotors an. Die Kraft der Feder 104 reicht nicht mehr aus, die durch die Drehbewegung umgesetzte Axialkraft zu kompensieren. Aufgrund des entsprechend ausgestalteten Steilgewindes bewegt sich der Rotor bei Befüllung in Richtung des Stators 2.0 bis zum Anschlag 202. Nun ist der Betriebszustand erreicht. Der Abstand im Betrieb wird dadurch aufrechterhalten, daß vom Anschlag 202 eine ausreichend hohe Gegenkraft gegen die umgesetzte Axialkraft aufgebracht wird. Wird der Retarder entleert, so überwiegt die von der Feder 104 aufgebrachte Kraft die umgesetzte Axialkraft und der Rotor wird selbsttätig in die eingezeichnete Leerlaufposition zurückverbracht. Ein besonderer Vorteil der dargestellten Ausführungsform liegt darin, daß die Befüllung des Retarders durch Öffnungen 103 in der Mitte der Schaufelräder, vorliegend des Statorschaufelrades, ohne daß eine Beschränkung hierin zu sehen wäre, erfolgt.

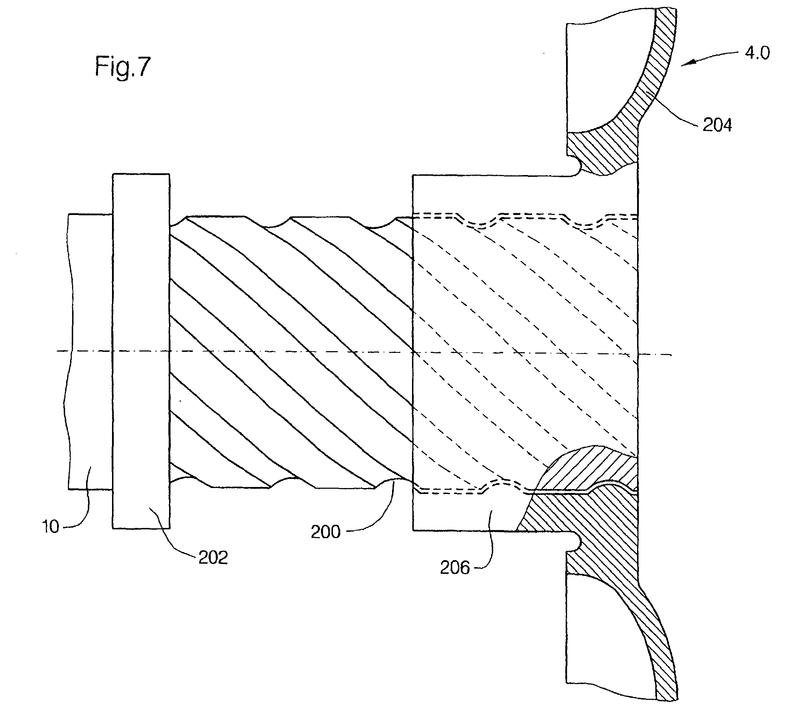

In Figur 7 ist die Rotorwelle 10 mit dem erfindungsgemäßen Steilgewinde als Umsetzmittel zum Umsetzen des Drehmomentes in eine Axialkraft dargestellt. Das Steilgewinde 200 ist nur in einem gewissen Abschnitt der Welle angeordnet, der durch einen axialen Anschlag 202 begrenzt wird. Der Rotor 4.0 umfaßt ein Rotorteil 204 sowie eine Rotornabe 206, die auf dem Steilgewinde 200 geführt wird. In einer alternativen Ausführungsform ist vorgesehen, das Steilgewinde anstatt auf der Welle in der Rotornabe auszubilden.

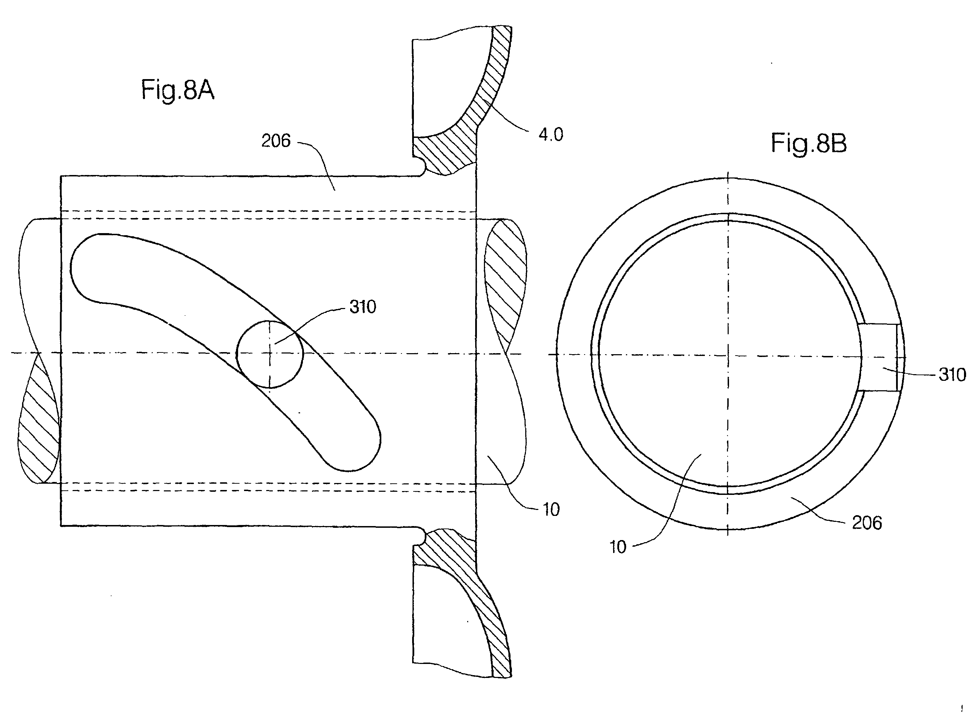

Die Figuren 8A und 8B zeigen eine Ausführungsform der Erfindung, bei der die Umsetzmittel in Form einer Kulissenführung ausgebildet sind. In Figur 8A ist wiederum dargestellt der Rotor 4.0 sowie die Welle 10. Der Rotor 4.0 umfaßt eine Rotomabe 206. Die Rotomabe weist eine Führungsnut 300 auf, in der ein Stift 310 der Welle eingreift. Im Betriebszustand wird die Rotornabe mit dem Stift 310 entlang der Nut 300 in die Betriebsposition geführt.

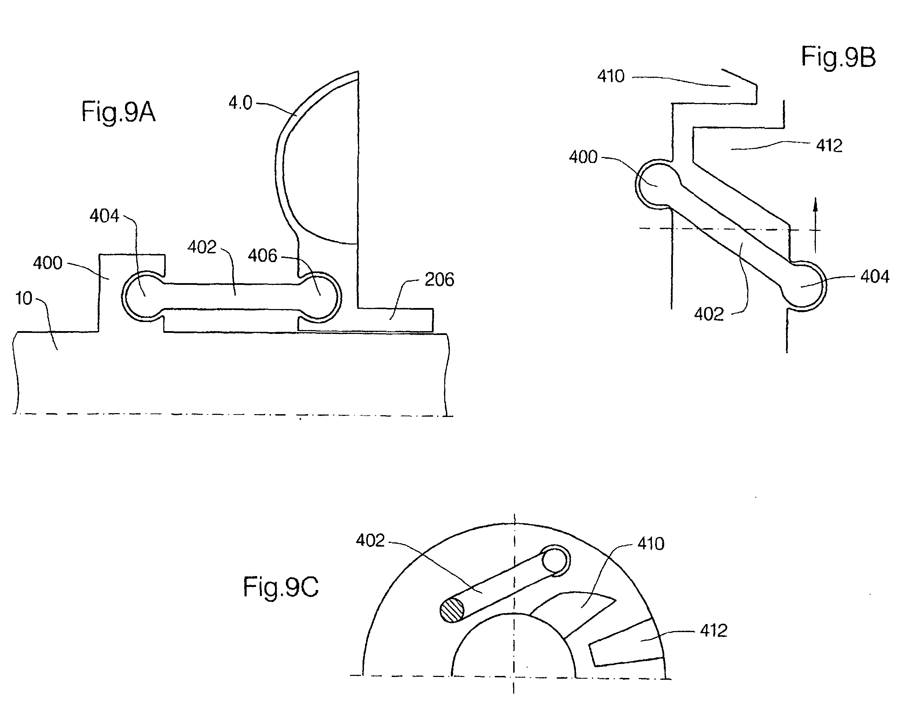

In den Figuren 9A, 9B und 9C ist eine weitere Möglichkeit der Umsetzung der Rotorbewegung in eine Axialbewegung dargestellt. Zwischen Rotor 4.0 bzw. Rotornabe 206 und einem auf der Welle 10 angeordneten Wellenflansch 400 ist ein Hebel 402 mit Hebelgelenken 404, 406 angeordnet. Sowohl Welle als auch Rotor weisen einen Anschlag, der in Figur 9B dargestellt ist, auf, und zwar ist Anschlag 410 der wellenseitige Anschlag und Anschlag 412 der rotorseitige Anschlag.

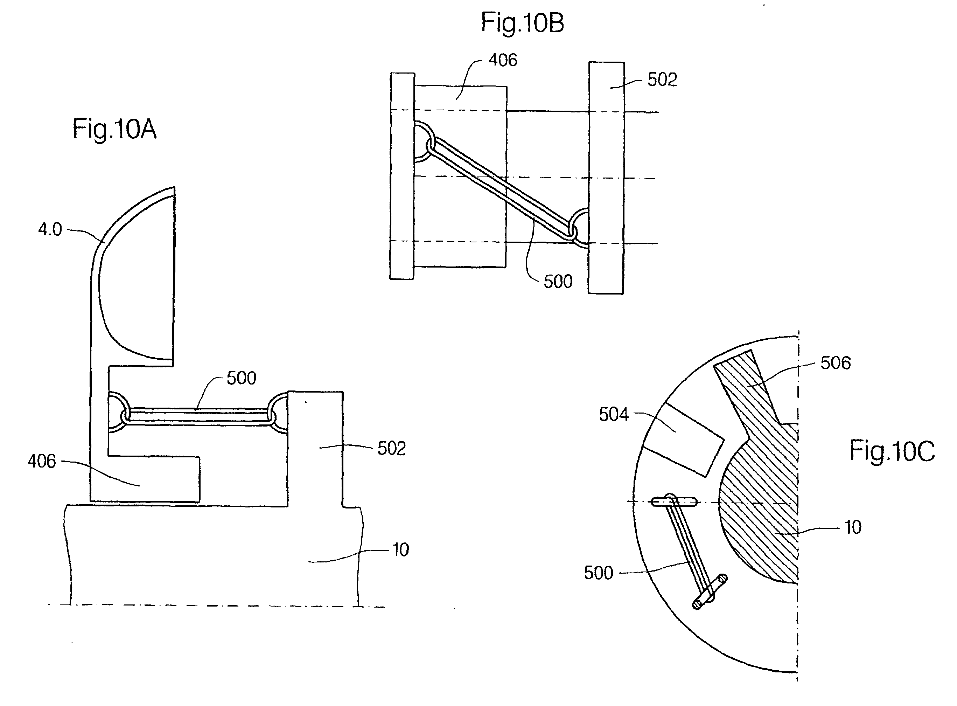

In Figur 10 ist als Mittel zum Umsetzen des Rotordrehmomentes in eine Axialbewegung ein Zugmittel dargestellt. Das Zugemittel 500 befindet sich zwischen Rotor 4.0 mit Rotorflansch 406 und einem auf der Welle 10 angeordneten Wellenflansch 502. Wiederum sind zwei Anschläge, ein Anschlag 504 wellenseitig und ein Anschlag 506 rotorseitig vorgesehen.

Mit der vorliegenden Erfindung wird somit erstmals ein Retarder in kompakter Bauweise zur Verfügung gestellt, der es erlaubt, die Leerlaufverluste auf ein minimales Maß zu reduzieren und darüber hinaus eine stufenlose Einstellung des Bremsmomentes.

**Patentansprüche**

**1.** Hydrodynamischer Retarder mit

1.1 einem Rotorgehäuse (3.0), das einen Rotor (4.0) umfaßt;
1.2 einem Statorgehäuse (1.0), das einen Stator (2.0) umfaßt, wobei:
1.3 Rotor- und Statorgehäuse miteinander verbunden sind, derart, daß zwischen Rotor und Stator ein Spalt (12.0, 12.1) ausgebildet wird;

1.4 Mitteln zum axialen Verschieben des Rotors (4.0) gegenüber dem Stator (2.0);
**dadurch gekennzeichnet, daß**
1.5 die Mittel zum axialen Verschieben Mittel zum selbsttätigen Verbringen des Rotors aus einer ersten Position -Leerlaufposition- in eine zweite Position -Arbeitsposition- und/oder vice versa umfassen, wobei det Spalt zwischen Rotor und Stator in der ersten Position größer ist als in der zweiten position.

2. Hydrodynamischer Retarder nach Anspruch 1, **dadurch gekennzeichnet, daß** die Mittel zum selbsttätigen Verbringen einen im Rotorgehäuse angeordneten Druckraum (3.1) aufweisen, wobei zumindest ein Teil der Begrenzungswand (4.4) des Druckraumes (3.1) von der Rotorrückseite gebildet wird.

3. Hydrodynamischer Retarder nach Anspruch 2, **dadurch gekennzeichnet, daß** das Rotorgehäuse zwei Druckräume (3.1, 3.2) aufweist, wobei der zweite Druckraum (3.2) Teil des Retarderauslaßkanales ist.

4. Hydrodynamischer Retarder nach Anspruch 2, **dadurch gekennzeichnet, daß** das Rotorgehäuse zwei Druckräume aufweist, wobei der erste Druckraum (3.1) Teil des Retarderfüllkanales und der zweite Druckraum (3.2) Teil des Retarderauslaßkanales ist.

5. Hydrodynamischer Retarder nach einem der Ansprüche 3 oder 4,
**dadurch gekennzeichnet, daß** ein weiterer Druckraum (3.3) vorgesehen ist.

6. Hydrodynamischer Retarder nach einem der Ansprüche 1 bis 5,
**dadurch gekennzeichnet, daß** die Mittel zum selbsttätigen Verbringen Mittel zum Umsetzen des Rotordrehmomentes in eine Axialbewegung umfassen.

7. Hydrodynamischer Retarder nach Anspruch 6, **dadurch gekennzeichnet, daß** die Mittel zum Umsetzen des Rotordrehmomentes ein Gewinde (200) mit gleichmäßiger Gewindesteigung umfassen.

8. Hydrodynamischer Retarder nach Anspruch 6, **dadurch gekennzeichnet, daß** die Mittel zum Umsetzen des Rotordrehmomentes eine Kulissenführung (300, 310) mit gleichmäßiger oder ungleichmäßiger Steigung umfassen.

9. Hydrodynamischer Retarder nach einem der Ansprüche 7 oder 8, **dadurch gekennzeichnet, daß** das Gewinde oder die Kulissenführung auf der Rotomabe (206) angeordnet ist.

10. Hydrodynamischer Retarder nach einem der Ansprüche 7 oder 8,
**dadurch gekennzeichnet, daß** das Gewinde oder die Kulissenführung in einem mitdrehenden Rotorgehäuse ausgebildet ist.

11. Hydrodynamischer Retarder nach einem der Ansprüche 7 oder 8,
**dadurch gekennzeichnet, daß** das Gewinde als Rollgewinde ausgebildet ist.

12. Hydrodynamischer Retarder nach Anspruch 6, **dadurch gekennzeichnet, daß** die Mittel zum Umsetzen des Rotordrehmomentes ein Zugmittel zum Umlenken der Umfangsbewegung des Rotors in eine Axialbewegung umfassen.

13. Hydrodynamischer Retarder nach Anspruch 6, **dadurch gekennzeichnet, daß** die Mittel zum Umsetzen des Rotordrehmomentes Gelenkhebel zum Umlenken der Umfangsbewegung des Rotors in eine Axialbewegung umfassen.

14. Hydrodynamischer Retarder nach einem der Ansprüche 1 bis 13,
**dadurch gekennzeichnet, daß** mindestens eine Rückstelleinrichtung zur axialen Verschiebung des Rotors in eine Position, in der der Spalt (12.1) zwischen Stator und Rotor maximal ist, vorhanden ist.

15. Hydrodynamischer Retarder nach Anspruch 14, **dadurch gekennzeichnet, daß** die Rückstellkraft der Rückstelleinrichtung mindestens durch eine Feder und/oder Druck aufgebracht wird.

16. Hydrodynamischer Retarder nach einem der Ansprüche 1 bis 15,
**dadurch gekennzeichnet, daß** die Mittel zur axialen Verschiebung einen Kolben (7.2) umfassen.

17. Verfahren zum selbsttätigen Verbringen eines axial verschieblichen Rotors eines hydrodynamischen Retarders aus einer ersten Position -Leerlaufposition- in eine zweite Position -Arbeitsposition-, wobei der hydrodynamische Retarder auf der Rotorrückseite mindestens eine Druckkammer aufweist, **dadurch gekennzeichnet, daß** in mindestens einem an der Rotorrückseite des Retarders angeordneten Druckraum durch Befüllen des Retarders mit Arbeitsmedium ein Druck aufgebaut wird, derart, daß der Rotor aus der ersten Position selbsttätig in die zweite Position verbracht wird, so daß sich ein vorbestimmter Spaltabstand zwischen Stator und Rotor einstellt, wobei der Spaltabstand in der ersten Position größer ist als in der zweiten Position.

18. Verfahren zum selbsttätigen Verbringen eines axial verschiebbaren Rotors eines hydrodynamischen Retarders aus einer ersten Position -Leerlaufposition- in ein zweite Position -Arbeitsposition-, wobei der hydrodynamische Retarder Mittel zum Umsetzen des Rotordrehmomentes in eine Axialbewegung umfaßt, **dadurch gekennzeichnet, daß** der Retarder befüllt und das Rotorlaufrad in Relativdrehung zur Antriebswelle versetzt wird, wobei in der Anfangsphase gilt:

mechanische Axialkräfte + hydraulische Axialkräfte >0,

so daß der Rotor aus einer ersten Position selbsttätig in eine zweite Position verbracht wird, so daß sich ein vorbestimmter Spaltabstand zwischen Stator und Rotor einstellt.

19. Verfahren nach Anspruch 17 oder 18, **dadurch gekennzeichnet, daß** der Retarder Rückstelleinrichtungen aufweist und durch Entleeren des Retarders der Retarder selbsttätig in die erste Position verbracht wird.

**Claims**

1. Hydrodynamic retarder comprising

    1.1 a rotor housing (3.0) comprising a rotor (4.0) ;
    1.2 a stator housing (1.0) comprising a stator (2.0), wherein:
    1.3 rotor housing and stator housing are connected to one another in such a way that a gap (12.0, 12.1) is formed between rotor and stator;
    1.4 means of axially displacing the rotor (4.0) relative to the stator (2.0);
    **characterized in that**
    1.5 the axial displacement means comprise means of automatically shifting the rotor from a first position - no-load position - into a second position - operating position - and/or vice versa, wherein the gap between rotor and stator is greater in the first position than in the second position.

2. Hydrodynamic retarder according to claim 1,
    **characterized in that** the automatic shifting means comprise a pressure chamber (3.1) disposed in the rotor housing, wherein at least part of the boundary wall (4.4) of the pressure chamber (3.1) is formed by the rear side of the rotor.

3. Hydrodynamic retarder according to claim 2,
    **characterized in that** the rotor housing comprises two pressure chambers (3.1, 3.2), wherein the second pressure chamber (3.2) is part of the retarder outlet channel.

4. Hydrodynamic retarder according to claim 2,
    **characterized in that** the rotor housing comprises two pressure chambers, wherein the first pressure chamber (3.1) is part of the retarder filling channel and the second pressure chamber (3.2) is part of the retarder outlet channel.

5. Hydrodynamic retarder according to one of claims 3 or 4, **characterized in that** a further pressure chamber (3.3) is provided.

6. Hydrodynamic retarder according to one of claims 1 to 5, **characterized in that** the automatic shifting means comprise means of converting the rotor torque into an axial motion.

7. Hydrodynamic retarder according to claim 6, **characterized in that** the means of converting the rotor torque comprise a thread (200) with a uniform thread lead.

8. Hydrodynamic retarder according to claim 6, **characterized in that** the means of converting the rotor torque comprise a link guide (300, 310) with a uniform or non-uniform lead.

9. Hydrodynamic retarder according to one of claims 7 or 8, **characterized in that** the thread or the link guide is disposed on the rotor hub (206).

10. Hydrodynamic retarder according to one of claims 7 or 8, **characterized in that** the thread or the link guide is formed in a co-rotating rotor housing.

11. Hydrodynamic retarder according to one of claims 7 or 8, **characterized in that** the thread takes the form of a rolling thread.

12. Hydrodynamic retarder according to claim 6, **characterized in that** the means of converting the rotor torque comprise a traction mechanism for deflecting the peripheral motion of the rotor into an axial motion.

13. Hydrodynamic retarder according to claim 6, **characterized in that** the means of converting the rotor torque comprise articulated levers for deflecting the peripheral motion of the rotor into an axial motion.

14. Hydrodynamic retarder according to one of claims 1 to 13, **characterized in that** at least one restoring device is provided for displacing the rotor axially into a position, in which there is the maximum gap (12.1) between stator and rotor.

15. Hydrodynamic retarder according to claim 14, **characterized in that** the restoring force of the restoring device is summoned up at least by a spring and/or pressure.

16. Hydrodynamic retarder according to one of claims 1 to 15, **characterized in that** the axial displacement means comprise a piston (7.2).

17. Method of automatically shifting an axially displaceable rotor of a hydrodynamic retarder from a first position - no-load position - into a second position - operating position -, wherein the hydrodynamic retarder at the rear side of the rotor comprises at least one pressure chamber, **characterized in that** through filling of the retarder with working medium a pressure is built up in at least one pressure chamber disposed at the rear side of the rotor, such that the rotor is brought from the first position automatically into the second position, so that a predetermined gap distance arises between stator and rotor, wherein the gap distance is greater in the first position than in the second position.

18. Method of automatically shifting an axially displaceable rotor of a hydrodynamic retarder from a first position - no-load position - into a second position - operating position -, wherein the hydrodynamic retarder comprises means of converting the rotor torque into an axial motion, **characterized in that** the retarder is filled and the rotor impeller is set in rotation relative to the drive shaft, wherein in the initial phase the following applies:

mechanical axial forces + hydraulic axial forces >0,

so that the rotor is brought from a first position automatically into a second position, so that a predetermined gap distance arises between stator and rotor.

19. Method according to claim 17 or 18, **characterized in that** the retarder comprises restoring devices and through emptying of the retarder the retarder is automatically brought into the first position.

**Revendications**

1.  Ralentisseur hydrodynamique comportant

    1.1 un carter de rotor (3.0) qui comprend un rotor (4.0) ;
    1.2 un carter de stator (1.0) qui comprend un stator (2.0), dans lequel :
    1.3 les carters de rotor et de stator sont mutuellement reliés de telle sorte qu'un interstice (12.0, 12.1) soit formé entre rotor et stator ;
    1.4 des moyens pour déplacer axialement le rotor (4.0) par rapport au stator (2.0) ;
        **caractérisé en ce que**
    1.5 des moyens de déplacement axial destinés à faire passer automatiquement le rotor d'une première position - position de marche à vide - dans une deuxiéme position - position de travail - et/ou inversement, l'interstice entre rotor et stator étant plus grand dans la première position que dans la deuxiéme position.

2.  Ralentisseur hydrodynamique selon la revendication 1, **caractérisé en ce que** les moyens de passage automatique présentent un espace de pression (3.1) agencé dans le carter de rotor, dans lequel au moins une partie de la paroi de confinement (4.4) de l'espace de pression (3.1) est formée par l'arriére du rotor.

3.  Ralentisseur hydrodynamique selon la revendication 2, **caractérisé en ce que** le carter de rotor présente deux espaces de pression (3.1, 3.2), le deuxième espace de pression (3.2) constituant une partie du canal de décharge du ralentisseur.

4.  Ralentisseur hydrodynamique selon la revendication 2, **caractérisé en ce que** le carter de rotor présente deux espaces de pression, le premier espace de pression (3.1) constituant une partie du canal de remplissage du ralentisseur et le deuxième espace de pression (3.2) constituant une partie du canal de décharge du ralentisseur.

5.  Ralentisseur hydrodynamique selon l'une des revendications 3 ou 4, **caractérisé en ce qu'**il est prévu un espace de pression supplémentaire (3.3).

6.  Ralentisseur hydrodynamique selon l'une des revendications 1 à 5, **caractérisé en ce que** les moyens de déplacement automatique comprennent des moyens destinés à transposer le couple de rotation du rotor en un mouvement axial.

7.  Ralentisseur hydrodynamique selon la revendication 6, **caractérisé en ce que** les moyens destinés à la transposition du couple de rotation du rotor comprennent un filetage (200) à pas constant.

8.  Ralentisseur hydrodynamique selon la revendication 6, **caractérisé en ce que** les moyens destinés à la transposition du couple de rotation du rotor comprennent un guide de coulisse (300, 310) à pente uniforme ou variable.

9.  Ralentisseur hydrodynamique selon l'une des revendications 7 ou 8, **caractérisé en ce que** le filet ou le guide de coulisse est agencé sur le moyeu du rotor (206).

10. Ralentisseur hydrodynamique selon l'une des revendications 7 ou 8, **caractérisé en ce que** le filet ou le guide de coulisse est formé dans un carter de rotor co-rotatif.

11. Ralentisseur hydrodynamique selon l'une des revendications 7 ou 8, **caractérisé en ce que** le filet est conçu comme un filetage de roulement.

12. Ralentisseur hydrodynamique selon la revendication 6, **caractérisé en ce que** les moyens de transposition du couple de rotation du rotor comprennent un moyen de traction destiné à changer le mouvement circonférentiel du rotor en un mouvement axial.

13. Ralentisseur hydrodynamique selon la revendication 6, **caractérisé en ce que** les moyens d'orientation du couple de rotation du rotor comprennent un levier articulé destiné à changer le mouvement circonférentiel du rotor en un mouvement axial.

14. Ralentisseur hydrodynamique selon l'une des revendications 1 à 13, **caractérisé en ce qu'**il existe au moins un dispositif de rappel du déplacement axial du rotor dans une position dans laquelle l'interstice (12.1) entre stator et rotor est maximal.

15. Ralentisseur hydrodynamique selon la revendication 14, **caractérisé en ce que** la force de rappel du dispositif de force de rappel est appliquée au moins par un ressort et/ou une pression.

16. Ralentisseur hydrodynamique selon l'une des revendications 1 à 15, **caractérisé en ce que** les moyens de déplacement axial comprennent un piston (7.2).

17. Procédé pour faire passer automatiquement un rotor de ralentisseur hydrodynamique déplaçable axialement, d'une première position - position de marche à vide - dans une deuxième position - position de travail -, le ralentisseur hydrodynamique présentant à l'arrière du rotor au moins une chambre de pression, **caractérisé en ce que**, dans au moins une chambre de pression agencée à l'arrière du rotor du ralentisseur, une pression est créée par remplissage du ralentisseur avec du fluide de travail, en sorte que le rotor passe automatiquement de la première position à la deuxième position, de manière à ce qu'un interstice de largeur prédéterminée s'ajuste entre rotor et stator, la largeur de l'interstice étant plus grande dans la première position que dans la deuxième position.

18. Procédé pour faire passer automatiquement un rotor de ralentisseur hydrodynamique déplaçable axialement, d'une première position - position de marche à vide - dans une deuxième position - position de travail -, le ralentisseur hydrodynamique comportant des moyens pour orienter le couple de rotation du rotor dans un mouvement axial, **caractérisé en ce que** le ralentisseur est rempli et que la roue motrice de rotor est décalée en rotation relativement à l'arbre moteur, où l'on a, dans la phase initiale l'équation :

$$\text{forces axiales mécaniques} + \text{forces axiales hydrauliques} > 0,$$

de sorte que le rotor passe automatiquement d'une première position à une deuxième position afin que s'ajuste une largeur d'interstice prédéterminée entre stator et rotor.

19. Procédé selon la revendication 17 ou 18, **caractérisé en ce que** le ralentisseur présente des dispositifs de rappel et que par évacuation du ralentisseur le ralentisseur passe automatiquement dans la première position par évacuation du ralentisseur.

Fig.1

Fig.2

Fig.3

Fig.4

EP 0 958 464 B1

Fig.6

16

Fig.7

10

202

200

206

4.0

204

EP 0 958 464 B1

Fig.8A

206

4.0

310

10

Fig.8B

310

10

206

EP 0 958 464 B1

Fig.9B

412

410

400

402

404

Fig.9A

4.0

206

406

402

404

400

10

Fig.9C

410

412

402

Fig.10C

506

10

502

Fig.10B

406

500

504

500

Fig.10A

4.0

502

10

500

406